# EUROPEAN PATENT SPECIFICATION

(11) **EP 0 295 634 B1**
(45) Date of publication and mention of the grant of the patent: **26.01.1994**
(21) Application number: 88109486.6
(22) Date of filing: 14.06.1988
(51) Int. Cl.: B30B 15/06, B29C 59/02, B29D 11/00, B29L 11/00

(54) **Working equipment for roughening the side of optical fiber**
Vorrichtung zum Aufrauhen der Längsseite von Lichtleitern
Dispositif pour dépolir le flanc d'une fibre optique

(30) Priority: 19.06.1987 JP 93351/87 U
(43) Date of publication of application: 21.12.1988
(73) Proprietor: MITSUBISHI RAYON CO., LTD., Tokyo 104 (JP)
(72) Inventor: Fujigaki, Takashi, Kamakura-shi Kanagawa (JP); Fujinaga, Yoshikazu, Toyohashi-shi Aichi (JP); Tokuda, Shuichiro, Chikusa-ku Nagoya-shi Aichi (JP); Furukawa, Noriyuki, Chikusa-ku Nagoya-shi Aichi (JP); Ichimura, Kiyoshi, Setagaya-ku Tokyo (JP); Shibuya, Yukio, Setagaya-ku Tokyo (JP); Iuchi, Shigeru, Setagaya-ku Tokyo (JP)
(74) Representative: Grams, Klaus Dieter, Dipl.-Ing.

(56) References cited:
- FR-A- 2 430 057
- GB-A- 2 036 635
- GB-A- 2 054 460
- JP-U-62 009 205
- JP-U-62 009 206
- US-A- 2 856 876
- US-A- 3 819 315
- US-A- 4 285 889

## Description

### BACKGROUND OF THE INVENTION

### Field of the Invention

This invention relates to a working equipment for roughening the side of optical fiber, particularly optical fiber ribbon consisting of optical fibers arranged in the form of tape, to allow light to leak uniformly through the side.

### Description of the Prior Art

Many prior art apparatus are provided, for illumination of the function display part in dark, with a illumination unit which consists of an acrylic resin light guide, a lamp, and a light emitter such as LED.

The illumination unit of this type however has a structural disadvantage in that the lamp is necessary to be disposed on the back of the display, and this presents difficulties such as rise in display temperature and uneven illumination.

For this reason, illumination units free of the abovementioned defects have been developed. For example, illumination methods using an optical fiber ribbon having a section allowing light to leak out from one side surface, said section being disposed on the back of the display, are disclosed in Japanese Laid-open Utility Models Nos. 9205/1987 and 9206/1987.

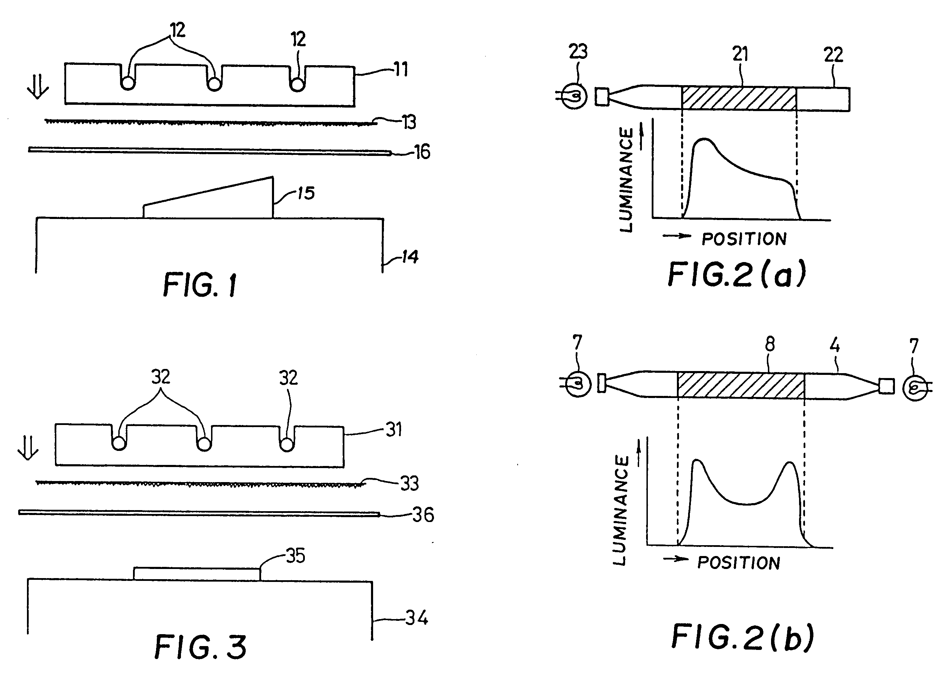

As shown in Fig. 3, an optical fiber ribbon 36 may be interposed between a cushion 35 on a plate 34, and an emery paper 33, and the latter is pressed against the side surface of the optical fiber ribbon by means of a hot stamper 31 with heating elements 32, so that the affected section (referred to as light-leakage section hereinafter) of the side surface becomes roughened to allow light to leak. The thus roughened fiber ribbon may be used for the above illumination methods.

The thus-worked optical fiber ribbon has light leakage characteristics, particularly at the light leakage section, as represented by the graphs in Figs. 2a and 2b, when a lamp is attached to either and each end, respectively, of the optical fiber ribbon.

In these cases difficulty is encountered: Fig. 2a is the graph plotting the measured results of luminance passing through the light-leakage section 21 of the worked optical fiber ribbon 22 with a light source at one end and indicating a tendency of the luminance to fall with distance from the light source. On the other hand, the optical fiber ribbon similarly worked but with a light source at each end gives the graph according to Fig. 2b indicating for the luminance to be high in the vicinity of each end of the ribbon and low in the neighborhood of the center. In Fig. 2b are designated an optical fiber ribbon at 4, a light source at 7, and a light leakage section at 8.

A working equipment comprising the features of the preamble of claim 1 is known from GB-A-20 36 635. This known working equipment mainly serves for the pressing of foil plastics video disks. The cushion-mounting plate of this known working equipment is flat. The cushion is provided with a convex surface which is substantially spherical or conical. This design serves to maintain the video disk and the hot stamper plate in excellent parallelism during the impressing operation.

If this known working equipment was used for roughening the side surface of an optical fiber ribbon this would result in a uniform roughness and a luminance characteristic similar to that shown in figures 2a and 2b.

### OBJECT AND SUMMARY OF THE INVENTION

Under these circumstances an object of the invention is to further develop the working equipment according to the preamble of claim 1 to make it abet for making an optical fiber ribbon with a rough surface having an improved side light-leakage characteristic.

The working equipment according to the invention is characterized by the features of claim 1.

### BRIEF DESCRIPTION OF THE DRAWINGS

Fig. 1 is a side view of a working equipment according to the invention shown schematically;
Figs. 2a and 2b are plane views of optical fiber ribbons obtained in by means of a prior art working equipment, in combination with graphs plotting the corresponding side luminance characteristics of the sections affected by the working equipment of Fig. 3;
Fig. 3 is a side view of a prior art equipment illustrated schematically;
Figs. 4a, 4b, 5a and 5b are side views of cushion-mounting plates formed in various forms to be useful as parts of the working equipment of Fig. 1;
Figs. 4c and 5c are plane views of optical fiber ribbons obtained by means of the working equipment according to Figs. 4a, 4b and 5a, 5b, respectively, in combination with graphs plotting the corresponding side luminance characteristics of the light-leakage sections.

### DETAILED DESCRIPTION OF THE INVENTION

The invention will be described more fully by way of examples with reference to the accompanying drawings hereinafter:
A working equipment embodying the invention is composed of a hot stamper 11 with heating elements 12, an emery paper 13 having rough surface to be transferred, a cushion 15 and a cushion-mounting plate 14, as shown in Fig. 1.

With the working equipment for roughing the side of optical fiber ribbon according to the invention, an optical fiber ribbon 16 as of plastic to be worked is inserted between cushion 15 and emery paper 13 as shown in Fig. 1, and then pressed together by a hot stamper 11.

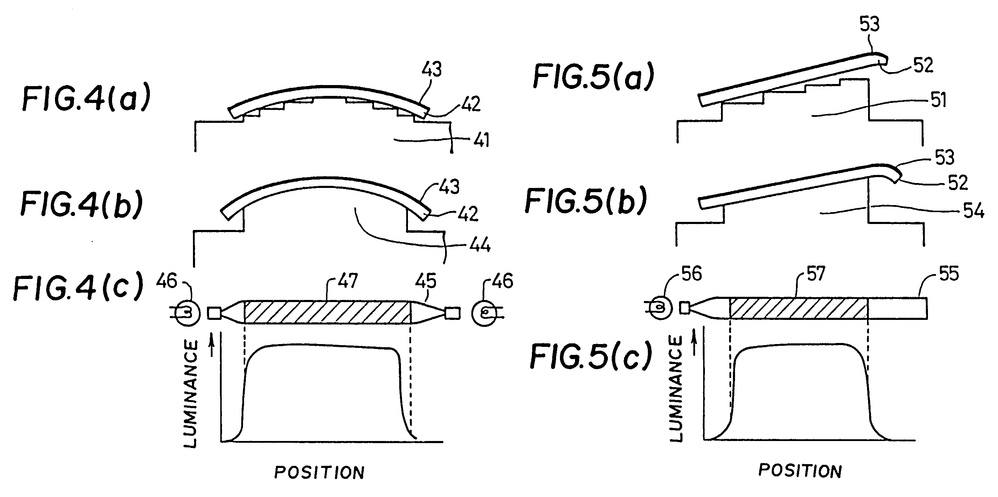

In this case it is necessary according to the invention for the portions 41, 44, 51, 54 of the cushion-mounting plate are formed in stepwise or continuously curved or sloped form, as shown in Figs. 4a, 4b, 5a and 5b.

Fig. 4a shows a cushion-mounting plate having a stepwise-curved portion 41. When an optical fiber ribbon is worked, a cushion 42 is mounted on the portion, and a releasing sheet 43, as desired, is superimposed as shown. Fig. 4b is the same as Fig. 4a except that the cushion-mounting plate has a continuously curved portion. Referring to Fig. 4c, using each shown cushion-mounting plate for working the side results in an optical fiber ribbon 45 which exhibits the characteristic of luminance against light-leakage position in the light-leakage section 47, as given by the graph, when a light source 46 is provided at each end. This demonstrates that the optical fiber ribbon worked with the optical fiber working equipment according to the invention allows very uniform light leakage through the light-leakage section.

Fig. 5a shows a cushion-mounting plate having a stepwise-sloped portion 51 on which a cushion 52 is mounted, and a releasing sheet 53 is overlaid on the cushion 52 as shown. Fig. 5b is the same as Fig. 5a except that the cushion-mounting plate has a continuously sloped portion 54. Referring to Fig. 5c, using each shown cushion-mounting plate for working the side results in an optical fiber ribbon 55 which exhibits the characteristic of luminance against light-leakage position in the light-leakage section 57, as given by the graph, when a light source 56 is provided at one end. This demonstrates that the optical fiber ribbon worked with the optical fiber working equipment according to the invention allows very uniform light leakage through the light-leakage section.

As above-described in detail, the working equipment for roughening the side of an optical fiber ribbon according to the invention can work the light leakage section so that luminance may be uniform over the section compared with that by the prior art equipment, this contributing to manufacturing more beneficial illuminators, etc.

## Claims

1. A working equipment for impressing a side surface of a flat element with a relief structure, comprising a hot stamper (11), a sheet (13) having a relief-structured surface to be transferred to said side surface, a cushion (42, 52) and a cushion-mounting plate (14), wherein the cushion (42, 52) and the cushion-mounting plate (14) as well as the sheet (13) having the relief-structured surface are pressed against the flat element, **characterized in that** the flat element is an optical fiber ribbon (16), in that the relief-structured surface is a rough surface so that the impressing of said side surface with said relief structure roughens the side surface of the optical fiber ribbon (16), and in that the cushion-mounting plate (14) has a portion (41, 44, 51, 54) formed in stepwise or continuously curved or sloped form.

2. A working equipment claimed in claim 1 wherein said sheet having a rough surface to be transferred is an emery paper (13).

3. A working equipment claimed in claim 1 or 2 wherein a releasing sheet (43, 53) is overlaid on said cushion (42, 52).

## Patentansprüche

1. Bearbeitungsvorrichtung zum Einpressen einer Reliefstruktur in eine Seitenfläche eines flachen Elements, die einen Heißstempel (11), ein Blatt (13), das eine auf die Seitenfläche zu übertragende Relief-strukturierte Oberfläche hat, ein Kissen (42, 52) und eine Kissen-Auflageplatte (14) aufweist, wobei das Kissen (42, 52) und die Kissen-Auflageplatte (14) ebenso wie das die Relief-strukturierte Oberfläche aufweisende Blatt (13) gegen das flache Element gepreßt werden, **dadurch gekennzeichnet**, **daß** das flache Element ein Lichtleiterband (16) ist, daß die Relief-strukturierte Oberfläche eine rauhe Oberfläche ist, so daß das Einpressen der Reliefstruktur in die Seitenfläche die Seitenfläche des Lichtleiterbandes (16) aufrauht, und daß die Kissen-Auflageplatte (14) einen in stufenweise oder durchgehend gebogener oder abgeschrägter Form ausgebildeten Abschnitt (41, 44, 51, 54) hat.

2. Bearbeitungsvorrichtung gemäß Anspruch 1, wobei das Blatt, das eine zu übertragende rauhe Oberfläche hat, ein Schleifpapier (13) ist.

3. Bearbeitungsvorrichtung gemäß Anspruch 1 oder 2, wobei ein Ablöseblatt (43, 53) auf das Kissen (42, 52) gelegt ist.

## Revendications

1. Dispositif de pressage d'une surface latérale d'un élément plat avec une structure à relief, comprenant une matrice chaude (11), une feuille (13) ayant une surface à relief structuré à transférer sur ladite surface latérale, un coussin (42, 52) et une plaque de montage du coussin (14), dans lequel le coussin (42, 52) et la plaque de montage du coussin (14) ainsi que la feuille (13) ayant la surface en relief structuré sont pressés contre l'élément plat, caractérisé en ce que l'élément plat est le flanc d'une fibre optique (16), en ce que la surface à relief structuré est une surface rugueuse de sorte que le pressage de ladite surface latérale avec ladite structure en relief dépolit la surface latérale du flanc d'une fibre optique (16), et en ce que la plaque de montage du coussin (14) a une partie (41, 44, 51, 54) formée en escalier ou incurvée et continue ou une forme inclinée.

2. Dispositif selon la revendication 1 dans lequel ladite feuille ayant une surface rugueuse à transférer est un papier émeri (13).

3. Dispositif selon la revendication 1 ou 2 dans lequel une feuille de séparation (43, 53) est posée sur ledit coussin (42, 52).
